(19) Europäisches Patentamt
European Patent Office
Office européen des brevets

(11) EP 4 579 036 A1

(12) **EUROPEAN PATENT APPLICATION**
published in accordance with Art. 153(4) EPC

(43) Date of publication:
**02.07.2025 Bulletin 2025/27**

(21) Application number: **24862516.2**

(22) Date of filing: **08.08.2024**

(51) International Patent Classification (IPC):
***D21H 19/18*** *(2006.01)* ***C09K 3/18*** *(2006.01)*

(52) Cooperative Patent Classification (CPC):
**C08L 91/06; C09K 3/18; D21H 17/21; D21H 19/18; D21H 21/14**

(86) International application number:
**PCT/JP2024/028502**

(87) International publication number:
**WO 2025/052862 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.09.2023 JP 2023145514**

(71) Applicant: **DAIKIN INDUSTRIES, LTD.**
**Osaka-shi, Osaka 530-0001 (JP)**

(72) Inventors:
- **SHIBATA, Shun**
  **Osaka-Shi, Osaka 530-0001 (JP)**
- **AKUTA, Ryo**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **WAX AND OIL-RESISTANT AGENT FOR PULP**

(57) This wax is a wax particle used in an oil-resistant agent for pulp, and has a median diameter (D50) of 0.01-1 μm, as measured by a laser diffraction scattering method, and this oil-resistant agent for pulp is a water-dispersible composition, contains a wax and a dispersant, and has a median diameter (D50) of 0.01-1 μm. Consequently, provided is a novel wax or oil-resistant agent for pulp, with which oil resistance can be imparted to a pulp substrate.

EP 4 579 036 A1

## Description

### Technical Field

The present disclosure relates to a wax and an oil resistant agent for pulp.

### Background Art

Patent Literature 1 discloses a masking tape in which an aqueous emulsion comprising a specific paraffin wax is used as a release treatment agent so that the coating surface is not repellent.

### Citation List

### Patent Literature

Patent Literature 1: JP 2011-116836 A

### Summary of Invention

### Technical Problem

Patent Literature 1 does not describe or suggest the use of a wax having a specific particle size for pulp, nor does it describe or suggest the development of oil repellency.

An object of the present disclosure is to provide a novel wax or oil resistant agent for pulp capable of imparting oil resistance to pulp substrates.

### Solution to Problem

The present disclosure includes the following embodiments.

[Item 1]

A wax that is a wax particle used for an oil resistant agent for pulp, wherein a volume median diameter (D50) is 0.01 μm or more and 1 μm or less.

[Item 2]

The wax according to item 1, wherein the wax is petroleum wax.

[Item 3]

The wax according to item 1 or 2, wherein the wax is at least one selected from the group consisting of paraffin wax and microcrystalline wax.

[Item 4]

The wax according to any one of items 1 to 3, which is for internal addition.

[Item 5]

The wax according to any one of items 1 to 4, wherein

the wax is at least one selected from the group consisting of paraffin wax and microcrystalline wax,
the wax is for internal addition, and
the volume median diameter (D50) is 0.1 μm or more and 1 μm or less.

[Item 6]

An oil resistant agent for pulp, comprising the wax according to any one of items 1 to 5.

[Item 7]

An oil resistant agent for pulp that is a water-dispersed composition, the oil resistant agent for pulp comprising:

a wax and a dispersant, wherein
a volume median diameter (D50) is 0.01 μm or more and 1 μm or less.

[Item 8]

The oil resistant agent for pulp according to item 7, wherein particles obtained by removing a liquid medium by air drying at room temperature have an average particle size of 0.01 μm or more and 1 μm or less obtained from an observation image by a scanning electron microscope.

[Item 9]

The oil resistant agent for pulp according to item 7 or 8, wherein the wax is petroleum wax.

[Item 10]

The oil resistant agent for pulp according to any one of items 7 to 9, wherein the wax is at least one selected from the group consisting of paraffin wax and microcrystalline wax.

[Item 11]

The oil resistant agent for pulp according to any one of items 7 to 10, wherein a charge density is -600 μeq/g or more and 100 μeq/g or less.

[Item 12]

The oil resistant agent for pulp according to any one of items 7 to 11, comprising an organic acid or an inorganic acid.

[Item 13]

The oil resistant agent for pulp according to any one of items 7 to 12, wherein

the wax is at least one selected from the group consisting of paraffin wax and microcrystalline wax,
the dispersant is at least one selected from the group consisting of a nonionic dispersant, an anionic dispersant and a cationic dispersant,
the additive for pulp comprises an organic acid,
an amount of the dispersant is 1 part by weight or more and 50 parts by weight or less based on 100 parts by weight of the wax,
the volume median diameter (D50) is 0.1 μm or more and 1 μm or less,
a volume abundance ratio of particles with a particle size of 100 μm or larger is 20% or less,
a volume abundance ratio of particles with a particle size of 10 μm or larger is 40% or less, and
a charge density is -400 μeq/g or more and 400 μeq/g or less.

[Item 14]

A method for producing a pulp product, comprising treating a pulp substrate with the oil resistant agent for pulp according to any one of items 6 to 13.

[Item 15]

A pulp product treated with the oil resistant agent for pulp according to any one of items 6 to 13.

[Item 16]

The pulp product according to item 15, which is a pulp formed article for food contact.

Advantageous Effect of Invention

The present disclosure can impart oil resistance to a pulp substrate.

Description of Embodiments

<Repellent>

The repellent according to the present disclosure adheres to a substrate (in particular, a pulp substrate) and imparts liquid-repellency, for example, water resistance, oil resistance, water-repellency, oil-repellency and/or antifouling properties to the substrate, and may function as a water-resistant agent, an oil-resistant agent, a water-repellent agent, an oil-repellent agent and/or an antifouling agent. For example, the repellent according to the present disclosure may be used as an oil resistant agent, or an oil resistant agent for pulp.

The repellent according to the present disclosure may include wax as an active ingredient (the wax will be described in detail separately in {Wax}). The wax itself may be used as a repellent, or may be used as a repellent in combination with other components described below.

The repellent of the present disclosure may not include one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group and a compound having a fluorine atom. The repellent of the present disclosure can impart liquid-repellency to a substrate without these fluorine compounds.

The volume abundance ratio of particles with a size of 100 μm or larger in the repellent of the present disclosure may be 0.1% or more, 0.3% or more, 0.5% or more, 1% or more, 1.5% or more, 3% or more, 4% or more, 5% or more, or 10% or more, and may be 50% or less, 30% or less, 20% or less, 15% or less, 10% or less, 5% or less, 3% or less, or 1.5% or less as measured by laser diffraction scattering. The method for setting the volume abundance ratio of particles with a size of 100 μm or larger as measured by laser diffraction scattering to the above range is not limited, and for example, particles in the raw material and/or dispersion may be formed into fine particles using a pulverizer or a homogenizer.

The volume abundance ratio of particles with a size of 10 μm or larger as measured by laser diffraction scattering in the repellent according to the present disclosure may be 0.05% or more, 0.1% or more, 0.3% or more, 0.5% or more, 1% or more, 1.5% or more, 3% or more, 4% or more, 5% or more, or 10% or more, and 50% or less, 30% or less, 20% or less, 15% or less, 10% or less, 5% or less, 3% or less, or 1.5% or less, preferably 25% or less, 15% or less or 10% or less. The method for setting the volume abundance ratio of particles with a size of 10 μm or larger as measured by laser diffraction scattering to the above range is not limited, and for example, particles in the raw material and/or dispersion may be formed into fine particles using a pulverizer or a homogenizer.

The repellent of the present disclosure may have a volume median diameter measured by laser diffraction scattering of 0.01 μm or more, 0.05 μm or more, 0.1 μm or more, 0.2 μm or more, 0.3 μm or more, 0.4 μm or more, 0.5 μm or more, or 0.6 μm or more, and may have a volume median diameter of 10 μm or less, 5 μm or less, 3 μm or less, 1 μm or less, 0.9 μm or less, 0.8 μm or less, 0.7 μm or less, 0.6 μm or less, 0.5 μm or less, 0.4 μm or less, 0.3 μm or less, or 0.2 μm or less, and preferably 1 μm or less. In the present disclosure, the volume median diameter refers to the median diameter (D50) in a volume-based particle size distribution by laser diffraction scattering.

The particles obtained by removing a liquid medium by air drying at room temperature from repellent (e.g., an oil resistant agent for pulp) that is the water-dispersed composition according to the present disclosure may have an average particle size obtained from an observation image by a scanning electron microscope of 0.01 μm or more, 0.05 μm or more, 0.1 μm or more, 0.2 μm or more, 0.3 μm or more, 0.4 μm or more, 0.5 μm or more, or 0.6 μm or more, and 10 μm or less, 5 μm or less, 3 μm or less, 1 μm or less, 0.9 μm or less, 0.8 μm or less, 0.7 μm or less, 0.6 μm or less, 0.5 μm or less, 0.4 μm or less, 0.3 μm or less, or 0.2 μm or less, and preferably 1 μm or less. To set the particle size to the above range, for example, particles in the raw material and/or dispersion may be formed into fine particles using a pulverizer or a homogenizer. The room temperature means 20°C to 30°C, in particular 25°C.

The repellent of the present disclosure may have an ionic charge density of -1,000 μeq/ g or more, -800 μeq/ g or

more, -600 μeq/ g or more, -500 μeq/ g or more, -400 μeq/ g or more, -250 μeq/ g or more, -100 μeq/ g or more, -50 μeq/ g or more, -25 μeq/ g or more, 0 μeq/ g or more, 1 μeq/ g or more, 25 μeq/ g or more, 50 μeq/ g or more, 100 μeq/ g or more, 200 μeq/ g or more, and preferably - 600 μeq/ g or more, and for example, -400 μeq/ g or more, -200 μeq/ g or more, or -50 μeq/ g or more, and may have an ionic charge density of 5,000 μeq/ g or less, 2,500 μeq/ g or less, 1,000 μeq/ g or less, 750 μeq/ g or less, 500 μeq/ g or less, 400 μeq/ g or less, 350 μeq/ g or less, 300 μeq/ g or less, 200 μeq/ g or less, 100 μeq/ g or less, or 50 μeq/ g or less, and preferably 1,000 μeq/ g or less, more preferably 500 μeq/ g or less, and for example, 300 μeq/ g or less. The repellent of the present disclosure has an ionic charge density of preferably -600 μeq/g or more and 100 μeq/g or less.

When the repellent has a negative ionic charge density of, for example, less than -10 μeq/g, charge repulsion can be imparted to dispersion and stability of the aqueous dispersion cab be improved. In addition, when the substrate has positive charge, the interaction with the substrate can be enhanced, and oil resistance can be improved when the substrate is treated with the repellent. When the repellent has a negative charge, the ionic charge density may be less than -20 μeq/g, less than -50 μeq/g, less than -75 μeq/g, or less than -100 μeq/g.

When the repellent has an ionic charge density of, for example, -10 μeq/g or more and less than 10 μeq/g, coagulation in mixing with a highly charged chemical agent can be reduced.

When the repellent has a positive ionic charge density of, for example, 10 μeq/g or more, charge repulsion can be imparted to dispersion and stability of the aqueous dispersion cab be improved. In addition, when the substrate has negative charge, the interaction with the substrate can be enhanced, and oil resistance can be improved when the substrate is treated with the repellent. When the repellent has a positive charge, the ionic charge density may be 20 μeq/g or more, 50 μeq/g or more, 75 μeq/g or more, 100 μeq/g or more or 150 μeq/g or more.

The ionic charge density of the repellent according to the present disclosure may be measured by the following method.

The anion requirement of a sample aqueous solution having a solid content of 0.1 g/L is measured by a particle charge meter (MUTEK PCD-04 manufactured by BTG) using a 1/1,000 N potassium polyvinyl sulfonate solution, and the ionic charge density (cationic charge density) is calculated by the following equation (1). Alternatively, the cation requirement is measured in the same manner by using poly(diallyldimethylammonium chloride) solution instead of the potassium polyvinylsulfonate solution to calculate the ionic charge density (anionic charge density) by the following equation (1).

$$\text{Ionic charge density } (\mu eq/g) = A/B \quad (1)$$

A: cation requirement or anion requirement (μeq/L)
B: Concentration of sample solution (g/L)

{Wax}

The repellent according to the present disclosure may comprise a wax. The wax may be an organic material that is solid at room temperature and liquid when heated. For example, the wax may be a hydrocarbon compound or a compound having a hydrocarbon group having 6 or more and 40 or less carbon atoms (e.g., an alkyl group).

The wax in the present disclosure adheres to a substrate (in particular, a pulp substrate) and imparts liquid repellency such as water resistance, oil resistance, water-repellency, oil-repellency and/or antifouling properties to the substrate.

The wax may be a compound having a monovalent hydrocarbon group having 1 or more and 40 or less carbon atoms and optionally having a substituent or a monovalent polysiloxane group. The wax may have a hydrocarbon group having 6 or more and 40 or less carbon atoms (e.g., an alkyl group) from the viewpoint of liquid repellency.

[Characteristics of wax]

Characteristics that the wax may have will be described below.

The wax may be in the form of particles (powder). The wax has an average particle size of 0.01 μm or more, 0.05 μm or more, 0.1 μm or more, 0.2 μm or more, 0.3 μm or more, 0.4 μm or more, 0.5 μm or more, or 0.6 μm or more, and 10 μm or less, 5 μm or less, 3 μm or less, 1 μm or less, 0.9 μm or less, 0.8 μm or less, 0.7 μm or less, 0.6 μm or less, 0.5 μm or less, 0.4 μm or less, 0.3 μm or less, or 0.2 μm or less, and preferably 1 μm or less. The above particle size is the primary particle size. The average particle size of the wax in the above range provides excellent particle stability and may improve liquid repellency. The average primary particle size may be measured by a microscope (scanning electron microscope). Specifically, a sample of wax particles is observed under a microscope at any magnification. Next, when particles are spherical, the diameter is considered as the particle size, and when particles are non-spherical, the average of the major

axis and the minor axis is regarded as the particle size. By repeating measuring the particle size of all particles present in a field of view and moving to a different field of view and measuring the particle size again, 100 particle sizes or more are measured, and the average of those is defined as the average particle size.

It is preferable that the wax of the present disclosure is wax particles having a specific volume abundance ratio of particles or a specific median diameter (D50) as measured by laser diffraction scattering. In the present disclosure, the laser diffraction scattering for wax is performed in dry conditions or wet conditions using a medium in which wax is insoluble (e.g., water). Usually there is little difference between the volume abundance ratio and the median diameter (D50) of the wax as measured by laser diffraction scattering and the volume abundance ratio and the median diameter (D50) of the repellent as measured by laser diffraction scattering, and the difference may be ±30% or less, ±20% or less, ±10% or less, or ±5% or less.

The volume abundance ratio of particles with a size of 100 μm or larger in the wax of the present disclosure as measured by laser diffraction scattering may be 0.1% or more, 0.3% or more, 0.5% or more, 1% or more, 1.5% or more, 3% or more, 4% or more, 5% or more, or 10% or more, and 50% or less, 30% or less, 20% or less, 15% or less, 10% or less, 5% or less, 3% or less, or 1.5% or less, and preferably 25% or less, 15% or less, or 10% or less. The method for setting the volume abundance ratio of particles with a size of 100 μm or larger as measured by laser diffraction scattering to the above range is not limited, and for example, particles in the raw material and/or dispersion may be formed into fine particles using a pulverizer or a homogenizer.

The volume abundance ratio of particles with a size of 10 μm or larger in the wax of the present disclosure as measured by laser diffraction scattering may be 0.1% or more, 0.3% or more, 0.5% or more, 1% or more, 1.5% or more, 3% or more, 4% or more, 5% or more, or 10% or more, and 50% or less, 30% or less, 20% or less, 15% or less, 10% or less, 5% or less, 3% or less, or 1.5% or less. The method for setting the volume abundance ratio of particles with a size of 10 μm or larger as measured by laser diffraction scattering to the above range is not limited, and for example, particles in the raw material and/or dispersion may be formed into fine particles using a pulverizer or a homogenizer.

The wax of the present disclosure may have a volume median diameter as measured by laser diffraction scattering of 0.01 μm or more, 0.05 μm or more, 0.1 μm or more, 0.2 μm or more, 0.3 μm or more, 0.4 μm or more, 0.5 μm or more, or 0.6 μm or more, and 10 μm or less, 5 μm or less, 3 μm or less, 1 μm or less, 0.9 μm or less, 0.8 μm or less, 0.7 μm or less, 0.6 μm or less, 0.5 μm or less, 0.4 μm or less, 0.3 μm or less or 0.2 μm or less, and preferably 1 μm or less. In the present disclosure, the volume median diameter refers to the median diameter (D50) in a volume-based particle size distribution by laser diffraction scattering.

The wax may have a HD (n-hexadecane) contact angle of 10° or more, 20° or more, 25° or more, 30° or more, 35° or more, 40° or more, 45° or more, 50° or more, 55° or more, 60° or more, or 65° or more, preferably 25° or more, and more preferably 30° or more, and 100° or less, 90° or less, or 75° or less. A HD contact angle of the wax of the lower limit or more can impart good liquid-repellency (in particular oil-repellency) to a substrate. The HD contact angle is a static contact angle of a wax to a spin-coated film, which is obtained by dropping 2 μL of HD on a spin-coated film and measuring the contact angle one second after the droplet reaches the film.

The wax may have a water contact angle of 35° or more, 40° or more, 45° or more, 50° or more, 55° or more, 65° or more, 75° or more, 85° or more, 90° or more, or 100° or more, and 160° or less, 140° or less, 130° or less, 120° or less, 110° or less, 100° or less or 90° or less. A water contact angle of the wax of the lower limit or more can impart good liquid-repellency (in particular water-repellency) to a substrate. The water contact angle is a static contact angle of a wax to a spin-coated film, which is obtained by dropping 2 μL of water on a spin-coated film and measuring the contact angle one second after the droplet reaches the film.

The wax may be a low molecular weight compound (having a weight average molecular weight of, for example, less than 1,000 or 500 or less) and/or a high molecular weight compound. When the wax is a high molecular weight compound, the wax may have a weight average molecular weight of 1,000 or more, 3,000 or more, 5,000 or more, 7,500 or more, 10,000 or more, 30,000 or more, 100,000 or more, 300,000 or more, or 500,000 or more, and 10,000,000 or less, 7,500,000 or less, 5,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, 7,500 or less, 5,000 or less, or 3,000 or less.

The wax may have a melting point of 30°C or more, 40°C or more, 60°C or more, 80°C or more, 100°C or more, or 120°C or more, preferably 40°C or more, 50°C or more, 60°C or more, 70°C or more, or 80°C or more, and 250°C or less, 225°C or less, 200°C or less, 150°C or less, 130°C or less, 120°C or less, 110°C or less, 100°Cor less, 80°C or less, or 50°C or less, and for example, 150°C or less, or 100°C or less. The melting point of wax may be measured according to JIS K 2235-1991.

[Structure of wax]

The wax in the present disclosure may not have any one selected from the group consisting of a fluoroalkyl group having 8 or more carbon atoms, a perfluoroalkyl group having 8 or more carbon atoms, a fluoroalkyl group having 4 or more

carbon atoms, a perfluoroalkyl group having 4 or more carbon atoms, a perfluoroalkyl group, a fluoroalkyl group, and a fluorine atom. The wax can impart liquid-repellency without including these fluorine-containing groups to a substrate.

The wax may be a hydrocarbon compound or a compound having a monovalent hydrocarbon group having 1 or more and 40 or less carbon atoms and optionally having a substituent or a monovalent polysiloxane group. The wax may be a hydrocarbon compound or a compound having a hydrocarbon group having 6 or more and 40 or less carbon atoms (e.g., an alkyl group) from the viewpoint of the improvement in liquid repellency.

(Monovalent hydrocarbon group optionally having a substituent)

The wax may have a monovalent hydrocarbon group optionally having a substituent.

The hydrocarbon group may be a monovalent hydrocarbon group having 1 or more and 40 or less carbon atoms. The hydrocarbon group may be an aromatic hydrocarbon group or an aliphatic hydrocarbon group, and is preferably an aliphatic hydrocarbon group, and in particular a saturated aliphatic hydrocarbon group (an alkyl group). The hydrocarbon group may be branched, cyclic or linear, and preferably linear.

The hydrocarbon group may have 1 or more, 3 or more, 6 or more, 8 or more, 10 or more, 12 or more, 14 or more, 16 or more, 18 or more, 20 or more, or 22 or more, preferably 6 or more, 10 or more, 12 or more, or 16 or more carbon atoms, and 40 or less, 35 or less, 30 or less, 25 or less, 20 or less, 15 or less, or 10 or less, preferably 30 or less, 25 or less, or 20 or less carbon atoms.

The hydrocarbon group may have a substituent, but is preferably non-substituted. Examples of substituents include -OR', $-N(R')_2$, -COOR', and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the hydrocarbon group having a substituent, the amount of carbon atom relative to the carbon atom and the heteroatom may be 70 mol% or more, 80 mol% or more, 90 mol% or more, 95 mol% or more, or 99 mol% or more, and preferably 75 mol% or more, and may be 95 mol% or less, 90 mol% or less, 85 mol% or less, or 80 mol% or less. The hydrocarbon group may have 1 to 3 (for example, 1) -OR' (in particular, - OH) as a substituent (for example at a site other than the end).

(Monovalent polysiloxane group)

The wax may have a monovalent polysiloxane group. A (monovalent) polysiloxane group can impart liquid-repellency to the substrate as the (monovalent) hydrocarbon group does.

The polysiloxane group may also be represented by the following formula:

$$-[-Si(R^s)_2-O-]_a-$$

[wherein $R^s$ is independently at each occurrence a hydrocarbon group having 1 to 40 carbon atoms or a reactive group, and a is an integer of 5 or more and 10,000 or less].

$R^s$ is a hydrocarbon group having 1 to 40 carbon atoms or a reactive group.

Examples of hydrocarbon groups having 1 to 40 carbon atoms include a hydrocarbon group having 1 to 5 carbon atoms and a hydrocarbon group having 6 to 40 carbon atoms.

Examples of hydrocarbon groups having 1 to 5 carbon atoms include a hydrocarbon group having 1 to 5 carbon atoms such as a methyl group, an ethyl group, a propyl group, a butyl group and a pentyl group (in particular an aliphatic hydrocarbon group, in particular an alkyl group, for example, a methyl group or an ethyl group, and in particular a methyl group).

The hydrocarbon group having 6 to 40 carbon atoms may be an aromatic hydrocarbon group or an aliphatic hydrocarbon group, and is preferably an aliphatic hydrocarbon group, and in particular a saturated aliphatic hydrocarbon group (an alkyl group). The hydrocarbon group may be cyclic, linear or branched, and preferably linear. The hydrocarbon group may have 6 or more, 8 or more, 10 or more, 12 or more, 14 or more, 16 or more, 18 or more, preferably 10 or more, more preferably 12 or more carbon atoms, and 40 or less, 35 or less, 30 or less, 25 or less, 20 or less, 15 or less, or 10 or less, preferably 30 or less, and more preferably 25 or less carbon atoms.

Examples of reactive groups include a group having a functional group (for example, a hydroxy group, an amino group, a mercapto group, an epoxy group, a carboxyl group, a halogen-substituted alkyl group, a vinyl group, a (meth) acrylic group, a (meth)acryloyloxy group, a (meth)acrylamide group, and a hydrogen atom directly bonded to a silicon atom). These functional groups may be directly bonded to a silicon atom, or may be bonded to an organic group directly bonded to a silicon atom. The organic group may be a hydrocarbon group, and for example, an alkylene group or a divalent aromatic group. The hydrocarbon group may have 2 or more and 12 or less carbon atoms. An alkylene group having 2 or more and 10 or less carbon atoms is preferred. A divalent aromatic group having 6 or more and 12 or less carbon atoms is preferred. The reactive group may be a group selected from the group consisting of a hydroxy group, an epoxy ring, a

carboxyl group, a (meth)acrylic group and an amino group, and for example, may be at least one selected from the group consisting of an epoxy ring, a hydroxy group, a (meth)acrylic group and a carboxyl group.

a is 3 or more, 5 or more, 10 or more, 30 or more, 50 or more, 100 or more, 500 or more, 1,000 or more, 2,000 or more, or 3,000 or more, and preferably 10 or more, and 10,000 or less, 7,500 or less, 5,000 or less, 3,000 or less, 1,500 or less, 1,000 or less, 500 or less, 300 or less, 200 or less, 100 or less, or 50 or less, and preferably 500 or less.

In the polysiloxane group, the amount of $R^s$, which is a hydrocarbon group having 1 to 5 carbon atoms, may be 20 mol% or more, 40 mol% or more, 60 mol% or more, or 80 mol% or more, and preferably 50 mol% or more, and 100 mol% or less, 90 mol% or less, 80 mol% or less, or 70 mol% or less relative to the total amount of $R^s$. For example, 50 mol% or more of the total amount of the $R^s$ group may be a methyl group or an ethyl group, and in particular, a methyl group.

In the polysiloxane group, the amount of $R^s$, which is a hydrocarbon group having 6 to 40 carbon atoms, may be 3 mol% or more, 10 mol% or more, 20 mol% or more, or 30 mol% or more, and 100 mol% or less, 90 mol% or less, 80 mol% or less, or 70 mol% or less relative to the total amount of $R^s$.

In the polysiloxane group, the amount of $R^s$, which is a reactive group, may be 5 mol% or more, 10 mol% or more, 20 mol% or more, or 30 mol% or more relative to the total amount of $R^s$, and 50 mol% or less, 40 mol% or less, 30 mol% or less, or 20 mol% or less relative to the total amount of $R^s$.

The $R^s$ group may be introduced randomly or in block, and preferably randomly.

The end structure of the polysiloxane group is not limited, and may be $-OR^s$, $-Si(R^s)_3$ and the like. $R^s$ in the end structure may have one or more reactive groups. Examples of reactive groups are as described above, and may be at least one selected from the group consisting of an epoxy ring, a hydroxy group, a (meth)acrylic group and a carboxyl group.

The polysiloxane group may have a linker. The raw material compound and the polysiloxane group may be linked by a linker, and examples of linkers include, but are not limited to, a hydrocarbon group having 1 to 40 (for example, 1 to 20) carbon atoms optionally disconnected via an oxygen atom, and may be, for example, a (poly)oxyalkylene group having 1 to 40 (for example, 1 to 20) carbon atoms.

Examples of polysiloxane groups include

$-[-Si(R^s)2-O-]_a-Si(R^s)_3$

$-L^{s1}-[-Si(R^s)_2-O-]_a-Si(R^s)_3$

$-L^{s1}-O-L^{s1}-[-Si(R^s)_2-O-]_a-R^s$

$-L^{s1}-[-Si(R^s)_2-O-]a^{-}Si(R^s)_3$

$-L^{s1}-O-L^{s1}-[-Si(R^s)2-O-]_a-R^s$

$-L^{s1}-[-Si(R^s)2-O-]a-Si(R^s)_3$,

$-L^{s1}- [-Si(R^s)2-O-]_a-R^s$

[wherein $R^s$ is independently at each occurrence a hydrocarbon group having 1 to 40 carbon atoms or a reactive group, $R^s$ at the end has one or more reactive groups,

methyl groups account for 50 mol% or more of the total amount of the $R^s$ group,
$L^{s1}$ is a hydrocarbon group having 1 to 20 carbon atoms, and
a is 5 or more and 10,000 or less], and

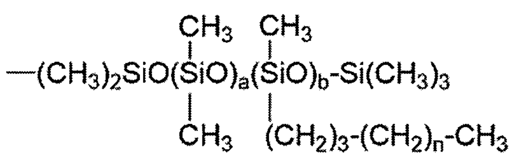

[wherein a is an integer of 0 to 150, b is an integer of 1 to 150, (a + b) is 5 to 200 and n is an integer of 0 to 36].

[Examples of wax]

The wax may be a hydrocarbon compound or a compound having a hydrocarbon group. Examples of hydrocarbon groups and preferred ranges are as described above. For example, the hydrocarbon group may have 6 or more and

40 or less carbon atoms.

Examples of wax include hydrocarbon wax (e.g., paraffin, polyolefin), non-hydrocarbon wax and polymer wax (e.g., vinyl polymer, silicone wax).

Examples of wax include:

petroleum wax such as paraffin wax, microcrystalline wax, montan wax, ozokerite wax, ceresin wax and petrolatum wax; and

synthesized wax such as Fischer Tropsch wax, polyethylene wax, polypropylene wax, acrylic polymer wax, polytetrafluoroethylene wax and silicone wax.

The wax may be a hydrocarbon compound.

[Amount of wax]

The amount of wax may be 0.01% by weight or more, 0.5% by weight or more, 1% by weight or more, 3% by weight or more, 5% by weight or more, 10% by weight or more, 20% by weight or more, 30% by weight or more, 50% by weight or more, 70% by weight or more, or 80% by weight or more, and 95% by weight or less, 90% by weight or less, 80% by weight or less, 70% by weight or less, 60% by weight or less, 50% by weight or less, 40% by weight or less, 30% by weight or less, 20% by weight or less, 10% by weight or less, 5% by weight or less, or 3% by weight or less in the repellent. Wax may be singly used as a repellent.

{Dispersant}

The repellent of the present disclosure may comprise a dispersant. The dispersant may be at least one selected from an organic dispersant and an inorganic dispersant. The dispersant may be at least one selected from an anionic dispersant, a nonionic dispersant, a cationic dispersant, an amphoteric dispersant and an inorganic dispersant.

An organic dispersant and an inorganic dispersant may be used as the dispersant, respectively, or an organic dispersant and an inorganic dispersant may be used in combination.

An organic dispersant may be used as the dispersant. The organic dispersant may be classified into a nonionic dispersant, an anionic dispersant, a cationic dispersant and an amphoteric dispersant. The organic dispersant may mean a surfactant.

The dispersant may have no fluorine.

[Nonionic dispersant]

The dispersant may comprise a nonionic dispersant. The nonionic dispersant may be a nonionic surfactant.

The nonionic dispersant may be of low molecular weight or high molecular weight. The nonionic dispersant may have a molecular weight of 100 or more, 500 or more, 1,000 or more, 2,000 or more, 4,000 or more, or 6,000 or more, and 100,000 or less, 10,000 or less, 7,500 or less, 5,000 or less, 25,000 or less, 750 or less, or 250 or less.

Examples of nonionic dispersant include ether, ester, ester ether, alkanolamide, polyol and amine oxide.

The ether is, for example, a compound having an oxyalkylene group (preferably a polyoxyethylene group).

The ester is, for example, an ester of an alcohol and a fatty acid. The alcohol is, for example, an alcohol which is 1 to 30 hydric (particularly dihydric to decahydric) and has 1 to 50 carbon atoms (particularly 10 to 30 carbon atoms) (for example, an aliphatic alcohol). Examples of the fatty acids are saturated or unsaturated fatty acids having 2 to 50 carbon atoms, particularly 5 to 30 carbon atoms.

The ester ether is, for example, a compound in which an alkylene oxide (particularly ethylene oxide) is added to an ester of an alcohol and a fatty acid. The alcohol is, for example, an alcohol which is 1 to 30 hydric (particularly dihydric to decahydric) and has 1 to 50 carbon atoms (particularly 3 to 30 carbon atoms) (for example, an aliphatic alcohol). Examples of the fatty acids are saturated or unsaturated fatty acids having 2 to 50 carbon atoms, particularly 5 to 30 carbon atoms.

The alkanolamide is formed of for example, a fatty acid and an alkanolamine. The alkanolamide may be a monoalkanolamide or a dialkanolamide. Examples of the fatty acids are saturated or unsaturated fatty acids having 2 to 50 carbon atoms, particularly 5 to 30 carbon atoms. The alkanolamine may be an alkanol with 1 to 3 amino groups and 1 to 5 hydroxyl groups, having 2 to 50, particularly 5 to 30 carbon atoms.

The polyol may be, for example, a dihydric to pentahydric alcohol having 10 to 30 carbon atoms.

The amine oxide may be an oxide (for example, having 5 to 50 carbon atoms) of an amine (secondary amine or preferably tertiary amine).

The nonionic dispersant is preferably a nonionic dispersant having an oxyalkylene group (preferably a polyoxyethylene group). The alkylene group in the oxyalkylene group preferably has 2 to 10 carbon atoms. The number of

oxyalkylene groups in the molecule of the nonionic dispersant is generally preferably 2 to 100.

The nonionic dispersant is selected from the group consisting of an ether, an ester, an ester ether, an alkanolamide, a polyol, or an amine oxide, and is preferably a nonionic dispersant having an oxyalkylene group.

The nonionic dispersant may be, for example, an alkylene oxide adduct of a linear and/or branched aliphatic (saturated and/or unsaturated) group, a polyalkylene glycol ester of a linear and/or branched fatty acid (saturated and/or unsaturated), a sorbitan ester of a linear and/or branched fatty acid (saturated and/or unsaturated), a glycerin ester of a linear and/or branched fatty acid (saturated and/or unsaturated), a polyglycerol ester of a linear and/or branched fatty acid (saturated and/or unsaturated), a sucrose ester of a linear and/or branched fatty acid (saturated and/or unsaturated), a polyoxyethylene (POE)/polyoxypropylene (POP) copolymer (random copolymer or block copolymer), and an alkylene oxide adduct of acetylene glycol. Among them, the nonionic dispersant is preferably a dispersant such that the structures of the alkylene oxide addition moiety and polyalkylene glycol moiety are polyoxyethylene (POE) or polyoxypropylene (POP) or POE/POP copolymer (which may be a random or block copolymer, for example.).

Furthermore, the nonionic dispersant may not include an aromatic group.

The nonionic dispersant may be the compound represented by the formula:

$$R^1O\text{-}(CH_2CH_2O)_p\text{-}(R^2O)_q\text{-}R^3$$

[wherein $R^1$ is an alkyl group having 1 to 22 carbon atoms, an alkenyl group or an acyl group, having 2 to 22 carbon atoms,
$R^2$ is each independently the same or different and is an alkylene group having 3 or more carbon atoms (for example, 3 to 10),
$R^3$ is a hydrogen atom, an alkyl group having 1 to 22 carbon atoms, or an alkenyl group having 2 to 22 carbon atoms,
p is a numeral of 2 or more,
q is 0 or a numeral of 1 or more.].

$R^1$ preferably has 8 to 20 carbon atoms, particularly 10 to 18 carbon atoms. Preferred examples of $R^1$ include an octyl group, a nonyl group, a trimethylnonyl group, a lauryl group, a tridecyl group, an oleyl group and a stearyl group.

$R^2$ is, for example, a propylene group and a butylene group.

In the nonionic dispersant, for example, p may be a numeral of 3 or more (for example, 5 to 200) and q may be a numeral of 2 or more (for example, 5 to 200). Namely, $-(R^2O)_q-$ may form, for example, a polyoxyalkylene chain.

The nonionic dispersant may be, for example, a polyoxyethylene alkylene alkyl ether comprising a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain. The oxypropylene chain is preferred among them.

Specific examples of the nonionic dispersants include a condensation product of ethylene oxide with hexylphenol, isooctatylphenol, hexadecanol, oleic acid, an alkane($C_{12}$-$C_{16}$)thiol, a sorbitan monofatty acid ($C_7$-$C_{19}$), an alkyl ($C_{12}$-$C_{18}$) amine, or the like, and a sorbitan fatty acid ester, a glycerin fatty acid ester, a polyglycerin fatty acid ester, a sucrose fatty acid ester, a propylene glycol fatty acid ester, a polyoxyethylene alkyl ether, a polyoxyethylene polyoxypropylene alkyl ether, a polyoxyethylene glycerin fatty acid ester, a polyoxyethylene sorbitan fatty acid ester, and a lecithin derivative. Examples of nonionic dispersants include polyoxyethylene alkyl ether, polyoxyethylene polyoxypropylene alkyl ether, polyoxyethylene polyoxybutylene alkyl ether, polyoxyethylene polyoxypropylene glycol and polyethyleneimine ethoxylate.

The proportion of the polyoxyethylene block can be 5 to 80% by weight, for example, 30 to 75% by weight, particularly 40 to 70% by weight, based on a molecular weight of the nonionic dispersant (copolymer).

The average molecular weight of the nonionic dispersant is generally 300 to 5,000, for example, 500 to 3,000.

For example, the nonionic dispersant may be used singly or in admixture of two or more. The nonionic dispersant may be a mixture of a compound with an HLB (hydrophilic-hydrophobic balance) of less than 15 (particularly 5 or less) and a compound with an HLB of 15 or more. More specifically, it is preferable to select the nonionic dispersant from polyoxyethylene alkyl ether, polyoxyethylene polyoxypropylene alkyl ether, polyoxyethylene and polyoxypropylene having an HLB of 1 to 18, sorbitan fatty acid ester, glycerol fatty acid ester, polyglycerol fatty acid ester, sucrose fatty acid ester, propylene glycol fatty acid ester, polyoxyethylene glycerol fatty acid ester and polyoxyethylene sorbitan fatty acid ester having an HLB of less than 7.

[Cationic dispersant]

The dispersant may comprise a cationic dispersant. The cationic dispersant may be a cationic surfactant. The cationic dispersant may be a compound not having an amide group.

The cationic dispersant may be of low molecular weight (with a molecular weight of 2,000 or less, in particular,

10,000 or less) or of high molecular weight (with a molecular weight of, for example, 2,000 or more). The cationic dispersant may not have an amide group. The cationic dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 10,000 or less, 7,500 or less, 5,000 or less, 25,000 or less, 750 or less, or 250 or less.

The cationic dispersant may be aliphatic or aromatic, and examples thereof include an ammonium salt (e.g., quaternary ammonium salt). The cationic dispersant may be oxyethylene-added ammonium salt. Specific examples thereof include an amine salt dispersant such as alkylamine salt, an amino alcohol fatty acid derivative, a polyamine fatty acid derivative and imidazoline; a quaternary ammonium salt dispersant such as alkyl trimethyl ammonium salt, dialkyl dimethyl ammonium salt, alkyl dimethyl benzyl ammonium salt, pyridinium salt, alkyl isoquinolinium salt, benzalkonium chloride and benzethonium chloride; and a polymer cationic dispersant such as polyquaternium-1 to 47. Examples of cationic dispersants include an alkylamine salt and a quaternary ammonium salt.

The low molecular weight cationic dispersant may be a compound represented by the formula:

$$R^{21}\text{-}N^{+}(\text{-}R^{22})(\text{-}R^{23})(\text{-}R^{24})X^{-}$$

wherein $R^{21}$, $R^{22}$, $R^{23}$ and $R^{24}$ are hydrogen or a hydrocarbon group having 1 to 40 carbon atoms, and X is an anionic group.

Specific examples of $R^{21}$, $R^{22}$, $R^{23}$ and $-R^{24}$ include an alkyl group (e.g., a methyl group, a butyl group, a stearyl group, a palmityl group) and an aromatic group (e.g., a benzyl group, a phenyl group). Specific examples of X include a halogen (e.g., chlorine) and an acid (e.g., hydrochloric acid and acetic acid). The cationic dispersant may be monoalkyltrimethylammonium salt (in which alkyl has 4 to 40 carbon atoms) and benzalkonium chloride.

More specifically, the low molecular weight cationic dispersant may be an ammonium salt represented by the formula:

$$R^{1}_{p}\text{-}N^{+}\text{-}R^{2}_{q}X^{-}$$

[wherein $R^1$ is a C12 or higher (e.g., $C_{12}$ to $C_{50}$) linear and/or branched aliphatic (saturated and/or unsaturated) group,

$R^2$ is H or a C1 to 4 alkyl group, a benzyl group, a polyoxyethylene group (in which the number of oxyethylene groups is for example, 1 (in particular 2, and especially 3) to 50) (particularly preferably $CH_3$, $C_2H_5$),
X is a halogen atom (e.g., chlorine) or a $C_1$ to $C_4$ fatty acid salt or a $C_1$ to $C_4$ sulfonate,
p is 1 or 2, q is 2 or 3 and p + q = 4.]
$R^1$ may have 12 to 50, and for example 12 to 30 carbon atoms.

Examples of the low molecular weight cationic dispersants may include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyl di(hydropolyoxyethylene) ammonium chloride, benzyldodecyl di(hydropolyoxyethylene) ammonium chloride, and N-[2-(diethylamino)ethyl]oleamide hydrochloride.

The high molecular weight cationic dispersant may be a polymer having a cationic group (for example, an ammonium group, a quaternary ammonium group) (for example, polypolyquaternium-1 to 47). Examples of high molecular weight cationic dispersants include a cationic natural product (in particular, cationic sugar) such as cationic starch, cationic cellulose (e.g., O-(2-hydroxy-3-(trimethylammonio)propyl)hydroxyethyl cellulose chloride), cationic guar gum, cationic xanthan gum and chitosan; a polymer of a cationic group-containing monomer such as aziridine, vinyl imidazole, aminoalkyl methacrylate, N,N,N',N'-tetramethyl-2-butene-1,4-diamine, quaternary dimethyl ammonium ethyl methacrylic acid, diallyldimethylammonium chloride, dimethylaminopropylamine and quaternary vinyl imidazole.

[Anionic dispersant]

The dispersant may comprise an anionic dispersant. The anionic dispersant may be an anionic surfactant. The dispersant may not include an anionic dispersant.

The anionic dispersant may be of low molecular weight or high molecular weight. The anionic dispersant may have a molecular weight of 100 or more, 500 or more, 1,000 or more, 2,000 or more, 4,000 or more, or 6,000 or more, and 100,000 or less, 10,000 or less, 7,500 or less, 5,000 or less, 25,000 or less, 750 or less, or 250 or less.

Examples of the anionic dispersant include an alkyl ether sulfate, an alkyl sulfate, an alkenyl ether sulfate, an alkenyl sulfate, an olefin sulfonate, an alkanesulfonate, a saturated or unsaturated fatty acid salt, an alkyl or alkenyl ether carbonate, an $\alpha$-sulfone fatty acid salt, a N-acylamino acid dispersant, a phosphate mono- or diester dispersant, and a

sulfosuccinic acid ester. Examples of anionic dispersants include a carboxylic acid salt (e.g., fatty acid salt).

[Amphoteric dispersant]

The dispersant may comprise an amphoteric dispersant. The amphoteric dispersant may be an amphoteric surfactant.

The amphoteric dispersant may be of low molecular weight or high molecular weight. The amphoteric dispersant may have a molecular weight of 100 or more, 500 or more, 1,000 or more, 2,000 or more, 4,000 or more, or 6,000 or more, and 100,000 or less, 10,000 or less, 7,500 or less, 5,000 or less, 25,000 or less, 750 or less, or 250 or less.

Examples of the amphoteric dispersants include, for example, alanines, imidazolinium betaines, amidobetaines, and acetic acid betaine, and specific examples of the amphoteric dispersants include, for example, lauryl betaine, stearyl betaine, lauryl carboxymethyl hydroxyethyl imidazolinium betaine, lauryl dimethylamino acetic acid betaine, and fatty acid amidopropyldimethylaminoacetic acid betaine.

[Inorganic dispersant]

The dispersant may comprise an inorganic dispersant.

The inorganic dispersant has an average primary particle size of 5 nm or larger, 30 nm or larger, 100 nm or larger, 1 μm or larger, 10 μm or larger, or 25 μm or larger, and 100 μm or smaller, 50 μm or smaller, 10 μm or smaller, 1 μm or smaller, 500 nm or smaller, or 300 nm or smaller. The average primary particle size may be measured by a microscope, for example, a scanning electron microscope or a transmission electron microscope. The inorganic dispersant may be hydrophilic particles.

Examples of inorganic dispersants include polyvalent metal phosphate such as tricalcium phosphate, magnesium phosphate, aluminum phosphate, zinc phosphate and hydroxyapatite; carbonate such as calcium carbonate and magnesium carbonate; silicate such as calcium metasilicate; sulfate such as calcium sulfate and barium sulfate; and hydroxide such as calcium hydroxide, magnesium hydroxide and aluminum hydroxide.

[Amount of Dispersant]

The amount of dispersant may be 0.01 parts by weight or more, 0.1 parts by weight or more, 1 part by weight or more, 3 parts by weight or more, 5 parts by weight or more, 10 parts by weight, 15 parts by weight or more, 20 parts by weight or more, 50 parts by weight or more, 75 parts by weight or more, or 100 parts by weight or more, relative to 100 parts by weight of the wax, and may be 500 parts by weight or less, 300 parts by weight or less, 200 parts by weight or less, 100 parts by weight or less 30 parts by weight or less, 20 parts by weight or less, 10 parts by weight or less, 5 parts by weight or less, 3 parts by weight or less, or 1 part by weight or less.

{Liquid medium}

The repellent in the present disclosure may comprise a liquid medium. The liquid medium may be water, an organic solvent, or a mixture of water and an organic solvent. The repellent may be a dispersion or a solution. The repellent in the present disclosure may include at least water.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may include a compound having at least one hydroxy group (for example, polyol such as alcohol and glycol solvent, and an ether form of polyol (for example, a monoether form)). These may be used alone, or two or more of them may be used in combination.

[Amount of liquid medium]

The amount of liquid medium may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less,

40 parts by weight or less, 20 parts by weight or less, or 10 parts by weight or less relative to 1 part by weight of the wax.

The amount of water may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less based on 1 part by weight of the wax.

The amount of the organic solvent may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the wax.

{Silicone}

The repellent in the present disclosure may include silicone (polyorganosiloxane). Containing the silicone enables providing favorable texture and durability in addition to favorable liquid-repellency.

As the silicone, a known silicone can be used, and examples of the silicone include a polydimethylsiloxane and modified silicones (for example, amino-modified silicone, epoxy-modified silicone, carboxy-modified silicone, and methylhydrogen silicone). For example, the silicone may be silicone wax having waxy properties. These may be used singly or in combination of two or more thereof.

A weight average molecular weight of the silicone may be 1,000 or more, 10,000 or more, or 50,000 or more. A weight average molecular weight of the silicone may be 500,000 or less, 2,500,000 or less, 100,000 or less, or 50,000 or less.

[Amount of Silicone]

The amount of silicone is 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the wax, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

{Organic Acid}

The repellent of the present disclosure may contain an organic acid. As the organic acid, a known organic acid can be used. Examples of the organic acid preferably include, for example, a carboxylic acid, a sulfonic acid, and a sulfinic acid, with the carboxylic acid being particularly preferred. Examples of the carboxylic acid include, for example, formic acid, acetic acid, propionic acid, butyric acid, oxalic acid, succinic acid, glutaric acid, adipic acid, malic acid, and citric acid, with the formic acid or acetic acid being particularly preferred. In the present disclosure, one type of organic acid may be used, or two or more thereof may be combined for use. For example, formic acid and acetic acid may be combined for use. The addition of organic acid can improve the stability of the aqueous dispersion.

[Amount of Organic Acid]

The amount of organic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the wax, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less. The amount of organic acid may be adjusted so that a pH of the repellent is 3 to 10, for example 5 to 9, particularly 6 to 8. For example, the repellent may be acidic (pH of 7 or less, for example 6 or less).

{Inorganic acid}

The repellent according to the present disclosure may comprise an inorganic acid. The inorganic acid may be a known inorganic acid. Examples of inorganic acids include hydrogen chloride, hydrogen bromide, hydrogen iodide, nitric acid, boric acid, sulfuric acid and phosphoric acid. In the present disclosure, one inorganic acid may be used, or two or more of them may be used in combination. The addition of inorganic acid can improve the stability of the aqueous dispersion.

[Amount of inorganic acid]

The amount of inorganic acid may be 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less based on 100 parts by weight of the wax. The amount of the inorganic acid may be adjusted so that the repellent has a pH of 3 to 10, for example, 5 to 9, and in particular, 6 to 8. The repellent may be acidic (may have a pH of 7 or less, for example, 6 or less).

{Curing Agent}

The repellent of the present disclosure may contain a curing agent (active hydrogen-reactive compound or active hydrogen-containing compound).

The curing agent (cross-linking agent) in the repellent can effectively cure the repellent. The curing agent may be an active hydrogen-reactive compound or an active hydrogen-containing compound, which reacts with an active hydrogen or an active hydrogen-reactive group. Examples of the active hydrogen-reactive compound include an isocyanate compound, epoxy compound, chloromethyl group-containing compound, carboxyl group-containing compound, and hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may contain an isocyanate compound. The isocyanate compound may be a polyisocyanate compound. The polyisocyanate compound is a compound having two or more isocyanate groups in one molecule. The polyisocyanate compound serves as a cross-linking agent. Examples of the polyisocyanate compound include, for example, an aliphatic polyisocyanate, an alicyclic polyisocyanate, an araliphatic polyisocyanate, an aromatic polyisocyanate, and derivatives of these polyisocyanates. The isocyanate compound may be a blocked isocyanate compound (for example, a blocked polyisocyanate compound). The blocked isocyanate compound is a compound in which an isocyanate group of an isocyanate compound is masked with a blocking agent to inhibit reaction.

Examples of the aliphatic polyisocyanates are aliphatic triisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, an aliphatic diisocyanate of 2,6-diisocyanatomethylcaproate, and aliphatic triisocyanates such as lysine ester triisocyanate, 1,4,8-triisocyanateoctane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyloctane. These may be used singly or in combination of two or more thereof.

Examples of the alicyclic polyisocyanates include, for example, an alicyclic diisocyanate and an alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the araliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of the aromatic polyisocyanate include, for example, m-phenylene diisocyanate, p-phenylene diisocyanate, 4,4'-diphenyl diisocyanate, 1,5-naphthalene diisocyanate, 2,4'- or 4,4'-diphenylmethane diisocyanate, or a mixture thereof, 2,4- or 2,6-tolylene diisocyanate or a mixture thereof, triphenylmethane-4,4',4''-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned

polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in solution and can be used in the same solution as solution of the repellent.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include, for example, a phenolic compound, lactam-based compound, aliphatic alcohol-based compound, and oxime-based compound. The polyisocyanate compound may be used singly or in combination of two or more thereof.

The epoxy compound is a compound having an epoxy group. Examples of the epoxy compound include epoxy compounds having a polyoxyalkylene group, such as a polyglycerol polyglycidyl ether and a polypropylene glycol diglycidyl ether; as well as a sorbitol polyglycidyl ether.

The chloromethyl group-containing compound is a compound having a chloromethyl group. Examples of the chloromethyl group-containing compound include, for example, a chloromethyl polystyrene.

The carboxyl group-containing compound is a compound having a carboxyl group. Examples of the carboxyl group-containing compound include, for example, a (poly)acrylic acid, and a (poly)methacrylic acid.

Specific examples of the ketone group-containing compound include, for example, a (poly)diacetone acrylamide, and diacetone alcohol.

Specific examples of the hydrazide compound include, for example, hydrazine, a carbohydrazide, and adipic acid hydrazide.

Specific examples of the melamine compound include, for example, a melamine resin and a methyl etherified melamine resin.

[Amount of Curing Agent]

The amount of the curing agent may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the wax, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, and 5 parts by weight or less.

{Other Component}

The repellent may contain a component other than the aforementioned components. Examples of the other components include, for example, polysaccharides, a paper strengthening agent, an agglomerating agent, a yield improver, a coagulant, a binder resin, an anti-slip agent, a sizing agent, a paper strengthening agent, a filler, an antistatic agent, an antiseptic agent, an ultraviolet absorber, an antibacterial agent, a deodorant, and a fragrance. These may be used singly or in combination of two or more thereof. In addition to the above components, as other components, for example, other water-repellent and/or oil-repellent agents, a dispersant, a texture modifier, a softening agent, a flame retarder, a coating material fixing agent, a wrinkle-resistant agent, a drying rate adjuster, a cross-linking agent, a film formation agent, a compatibilizer, an antifreezing agent, a viscosity adjuster, an ultraviolet absorber, an antioxidant, a pH adjuster, an insect repellent, an antifoaming agent, an anti-shrinkage agent, a laundry wrinkle-resistant agent, a shape retention agent, a drape retention agent, an ironing improving agent, a brightening agent, a whitening agent, fabric softening clay, a migration-proofing agent such as a polyvinylpyrrolidone, a polymer dispersant, a soil release agent, a scum dispersant, a fluorescent brightening agent such as 4,4-bis(2-sulfostyryl)biphenyldisodium (Tinopal CBS-X manufactured by Ciba Specialty Chemicals Plc), a dye fixing agent, an anti-color fading agent such as 1,4-bis(3-aminopropyl) piperazine, a stain removing agent, enzymes such as cellulase, amylase, protease, lipase, and keratinase as fiber surface modifiers, a foam inhibitor, and silk protein powder that can impart texture and functions of silk such as moisture absorption and release properties, and surface modified products or emulsified dispersions thereof (for example, K-50, K-30, K-10, A-705, S-702, L-710, FP series (Idemitsu Petrochemical Co., Ltd.), hydrolyzed silk liquid (Jomo), SILKGEN G Soluble S (ICHIMARU PHARCOS Co., Ltd.)), an antifouling agent (for example, a nonionic polymer compound composed of an alkylene terephthalate and/or an alkylene isophthalate units and a polyoxyalkylene unit (for example, FR627 manufactured by GOO CHEMICAL CO., LTD.), SRC-1 manufactured by Clariant (Japan), K. K.), can be compounded. These may be used singly or in combination of two or more thereof.

[Amount of Other Component]

Each amount or the total amount of other components may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the wax, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

<Pulp composition>

The pulp composition of the present disclosure comprises pulp and a repellent component. The pulp composition of the present disclosure is obtained by treating pulp with a repellent.

{Pulp}

The pulp composition includes pulp, and the pulp, which is a pulp substrate, is treated with a repellent. The pulp substrate may be in the form of pulp alone, pulp slurry, or a pulp product. Examples of pulp substrates include bleached or unbleached chemical pulp such as kraft pulp or sulfite pulp; bleached or unbleached high-yield pulp such as groundwood pulp, mechanical pulp, or thermomechanical pulp; pulp slurry including the above pulp; and a pulp product such as paper, a paper container and a paper formed article made of wastepaper pulp such as wastepaper of newspapers, magazines and cardboard, or deinked wastepaper. Specific examples of the pulp products include, for example, a food packaging material, a food container, gypsum liner board base paper, coated base paper, medium-quality paper, a general liner and core, neutral pure white roll paper, a neutral liner, a rust-proof liner, and metal pasted paper, kraft paper, neutral printing writing paper, neutral coated base paper, neutral PPC paper, neutral thermal paper, neutral pressure-sensitive base paper, neutral inkjet paper and neutral information paper, and molded paper (mold container). Preferred examples of pulp products include a food packaging material and a food container, and in particular, a pulp formed article for food contact.

The amount of pulp may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more, or 90% by weight or more, and 99% by weight or less, 75% by weight or less, 50% by weight or less, 40% by weight or less, 30% by weight or less, 20% by weight or less, 10% by weight or less, 5% by weight or less, 4% by weight or less, or 3% by weight or less in the pulp composition. Typically, when the pulp composition is prepared by internal addition, the amount of pulp may be 30% by weight or less in the pulp composition; when the pulp composition is prepared by external addition, the amount of pulp may be 75% by weight or more in the pulp composition.

{Liquid medium}

The pulp composition may comprise a liquid medium. The liquid medium may be water, an organic solvent, or a mixture of water and an organic solvent. The liquid medium is typically an aqueous medium, and in particular, water. The liquid medium may comprise a liquid medium derived from repellent.

[Amount of liquid medium]

The amount of the liquid medium may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more, 90% by weight or more, or 95% by weight or more, and 99% by weight or less, 75% by weight or less, 50% by weight or less, 40% by weight or less, 30% by weight or less, 20% by weight or less, 10% by weight or less, 5% by weight or less, 4% by weight or less, or 3% by weight or less in the pulp composition. Typically, when the pulp composition is prepared by internal addition, the amount of the liquid medium is 50% by weight or more, and in particular 90% by weight or more in the pulp composition; when the pulp composition is prepared by external addition, the amount of the liquid medium is 30% by weight or less, and in particular, 10% by weight or less in the pulp composition.

{Repellent}

The pulp composition may comprise wax included in the repellent. The repellent will be separately described in <Repellent>.

[Amount of repellent]

The amount of the repellent added to the pulp substrate may be adjusted to achieve the desired amount of wax. The amount of the wax may be 0.1% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, preferably 5.0% by weight or less, and more preferably 3.0% by weight or less based on the pulp.

In the external addition treatment, the amount of the wax contained in the coating layer may be 0.01 $g/m^2$ or more, 0.03 $g/m^2$ or more, 0.05 $g/m^2$ or more, 0.1 $g/m^2$ or more, 0.3 $g/m^2$ or more, 0.5 $g/m^2$ or more, or 1.0 $g/m^2$ or more, and 5.0 $g/m^2$ or less, 4.0 $g/m^2$ or less, 3.0 $g/m^2$ or less, 2.0 $g/m^2$ or less, 1.0 $g/m^2$ or less, 0.5 $g/m^2$ or less, 0.3 $g/m^2$ or less, or 0.1 $g/m^2$ or less.

{Paper strength agent}

The pulp composition may comprise a paper strength agent. Examples of paper strength agents include:

a polyacrylamide paper strength agent such as cationic polyacrylamide, anionic polyacrylamide and amphoteric polyacrylamide;

a polysaccharide paper strength agent such as starch, enzyme modified starch, thermochemically modified starch, oxidized starch, esterified starch, etherified starch (e.g., hydroxyethylated starch), aldehyde starch, cationized starch, starch, xanthan gum, gum karaya, welan gum, guar gum, pectin, tamarind gum, carrageenan, chitosan, gum arabic, locust bean gum, cellulose, alginic acid, agar, dextran, cellulose, carboxymethylcellulose, hydroxyethylcellulose, hydroxypropylcellulose, chitin nanofiber, cellulose nanofiber and pullulan, and a modified polysaccharide thereof (e.g., a modified polysaccharide into which a hydroxyl group or a cationic group is introduced);

a polyamide paper strength agent such as polyamide resin, polyamine resin, polyamide-polyamine resin, polyamide-epichlorohydrin resin, polyamide-polyamine-epichlorohydrin resin, polyamide-polyurea-formaldehyde resin and epoxidized polyamide resin;

a urea/melamine paper strength agent such as urea resin, melamine resin, urea-formaldehyde resin and melamine-formaldehyde resin;

a polyvinyl alcohol paper strength agent such as polyvinyl alcohol, completely saponified polyvinyl alcohol, partially saponified polyvinyl alcohol, carboxyl modified polyvinyl alcohol, silanol modified polyvinyl alcohol, cation modified polyvinyl alcohol and terminal alkyl modified polyvinyl alcohol; and

a styrene butadiene copolymer, polyvinyl acetate, a vinyl chloride-vinyl acetate copolymer, polyvinyl chloride, polyvinylidene chloride, polyacrylic ester, fatty acid diamide, polyethyleneimine resin and ketone aldehyde resin. A polyacrylamide paper strength agent, a polysaccharide paper strength agent and a polyamide paper strength agent are preferred as the paper strength agent in the present disclosure.

[Amount of paper strength agent]

The amount of the paper strength agents may be 0.1% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, and preferably 5.0% by weight or less based on the pulp.

{Sizing agent}

The pulp composition may comprise a sizing agent. Examples of sizing agents include a cationic sizing agent, an anionic sizing agent, a neutral sizing agent and an amphoteric sizing agent, a rosin-based sizing agent (for example, an acidic rosin-based sizing agent and a neutral rosin-based sizing agent), alkyl ketene dimer and alkenyl succinic anhydride.

[Amount of sizing agent]

The amount of the sizing agent may be 0.1% by weight or more, 0.2% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less based on the pulp.

{Other additives}

The pulp composition may also include an additive used for producing a pulp product in addition to the above components, such as a fixing agent (e.g., aluminum sulfate), an organic acid (e.g., formic acid, acetic acid), an agglomerating agent, a yield improver, a dye, a fluorescent dye, a slime control agent, and an antifoaming agent. While the pulp composition includes a component derived from a repellent, the components contained in the repellent which are described above may be added to the pulp composition as an additive.

The amount of the above additives may be, respectively, 0.1% by weight or more, 1% by weight or more, 3% by weight or more, 5% by weight or more, and 30% by weight or less, 20% by weight or less, 10% by weight or less, 5% by weight or less, 1% by weight or less, or 0.5% by weight or less based on the pulp.

<Method for producing pulp product>

The method for producing a pulp product of present disclosure may comprise a step of treating a pulp substrate with a repellent. A pulp product may be obtained by subjecting the resulting pulp composition to processing such as drying, heating and forming according to need.

The pulp substrate and the type and the composition of the repellent are as described in the above [Pulp composition]. The repellent of the present disclosure can be applied to a substrate as a treatment agent (particularly a surface-treating agent) by a conventionally known method. The treatment method may be a method for dispersing the repellent in the present disclosure in an organic solvent or water, if necessary, to dilute it and allowing it to adhere to an inside of a pulp substrate and/or on a surface thereof by a known method such as dip coating, spray coating, and foam coating. After drying, a pulp product to which a solid component of the repellent has been adhered, is obtained. If necessary, the repellent of the present disclosure may be applied in combination of a suitable cross-linking agent, and curing may be carried out. A concentration of the repellent in a treatment agent brought into contact with a pulp substrate may be appropriately changed depending on its use, and may be 0.01 to 10% by weight, for example 0.05 to 5% by weight.

The repellent can be applied to a pulp substrate by any of methods known for treating a pulp substrate with liquid. The pulp substrate may be immersed in the repellent or mixed with the repellent, or solution may be adhered or sprayed onto the substrate. The treated pulp substrate is preferably dried and cured by heating in order to develop liquid-repellency. The heating temperature may be, for example, 100°C to 200°C, 100°C to 170°C, or 100°C to 120°C. In the present disclosure, the heating time may be 5 seconds to 60 minutes, for example, 30 seconds to 3 minutes.

The method of treatment of the pulp substrate may be an internal addition treatment method in which a repellent is added to pulp before papermaking (e.g., pulp slurry), or an external addition treatment method in which a repellent is applied to paper after papermaking (e.g., a pulp product). Examples of internal addition treatment include mixing and dipping, and the internal addition treatment may include a step of adding a repellent to a pulp slurry and mixing with stirring. Examples of external addition treatment include spraying and coating, and more specifically a pound-type two-roll size press, a gate roll type, and a rod metering type size press. The treatment may be external addition treatment or internal addition treatment. For example, when the pulp substrate is paper, the repellent may be applied to paper, or solution may be adhered or sprayed onto paper, or the repellent may be mixed with pulp slurry before papermaking to perform treatment.

The method of treatment may be internal addition treatment in which a repellent is added to pulp slurry before papermaking. The internal addition treatment method may include, but is not limited to, one or more of a step of adding the repellent to pulp slurry and stirring and mixing them; a step of sucking and dehydrating the pulp composition prepared in the step through a net-like body of predetermined shape and depositing the pulp composition then to form a pulp formed article intermediate; and a step of molding and drying the pulp formed article intermediate by using a heated forming mold to obtain a pulp formed article. After having been lightly dried at room temperature or elevated temperature, the treated paper may be arbitrarily subjected to heat treatment, depending on the nature of the paper. Temperature of the heat treatment may be 150°C or higher, 180°C or higher, or 210°C or higher, and may be 300°C or lower, 250°C or lower, or 200°C or lower, particularly 80°C to 180°C. Carrying out the heat treatment in such a temperature range enables exhibiting, for example, excellent oil resistance and water resistance. The pulp substrate which has undergone internal addition treatment may be subjected to external addition treatment to be treated with the repellent, allowing a further wax and a further paper strength agent to be adhered to the surface.

The treatment method may be an external addition treatment in which the repellent is applied to pulp substrate after papermaking. A size press used in an external addition treatment, can be divided into the following types depending on a coating method. One coating method involves supplying a coating liquid (size liquid) to a nip portion formed by passing paper between two rubber rolls, creating a pool of the coating liquid called a pond, and allowing the paper to pass through this pool to coat both sides of the paper with the size liquid, which is a method employed for a so-called pound-type two-roll size press. Another coating method is a method used for a gate roll type size press in which a size liquid is applied by a surface transfer type, and a rod metering type size press. In the pound-type two-roll size press, the size liquid easily penetrates into an inside of paper, and in the surface transfer type, a size liquid component is likely to stay on a surface of

the paper. In the surface transfer type, a coating layer is likely to stay on a surface of paper more than in the pound-type two-roll size press, and the amount of coating layer formed on the surface is more than in the pound-type two-roll size press. In the present disclosure, even in the case of using the former pound-type two-roll size press, performance can be imparted to paper. After having been lightly dried at room temperature or elevated temperature, the paper treated in such a manner is arbitrarily accompanied by heat treatment that can have a temperature range of up to 300°C, for example up to 200°C, and particularly the temperature range of 80°C to 180°C, depending on the nature of the paper, as a result of which excellent oil resistance, water resistance, and the like can be exhibited.

Examples

Hereinafter, the present disclosure will be described in detail with reference to Examples, but the present disclosure is not limited to these Examples.

<Test Method>

The test procedures are as follows.

[Volume abundance ratio and median diameter (D50) of particle]

The volume abundance ratio of particles with a size of 100 μm or larger, the volume abundance ratio of particles with a size of 10 μm or larger and the median diameter (D50) of the wax and the aqueous dispersion were calculated from the volume-based frequency distribution (volume distribution) obtained by the measurement using a laser diffraction/-scattering apparatus.

[Average particle size of particles obtained by removing liquid medium from oil resistant agent]

The concentration of the aqueous dispersion of the oil resistant agent was adjusted to 1% by weight. An observation sample was prepared by casting the aqueous dispersion on aluminum foil and removing a liquid medium by drying at room temperature for 1 day. The observation sample was observed under a scanning electron microscope to obtain an observation image, and the particle size was observed. When particles were spherical, the diameter was considered as the particle size, and when particles were non-spherical, the average of the major axis and the minor axis was regarded as the particle size. By repeating measuring the particle size of all particles present in a field of view and moving to a different field of view and measuring the particle size again, 100 particle sizes or more were measured, and the average of those was defined as the average particle size of the particles obtained by removing a liquid medium from the oil resistant agent.

[Preparation of pulp mold]

A pulp mold was molded by using an automatic mold molding machine. In the lower part thereof, a net-like body was arranged on a pulp mold forming mold made of metal with many suction holes, a metal tank was arranged in the upper part, and a mixture of pulp slurry and the water-dispersed oil resistant agent (a pulp composition) was charged in the upper metal tank. From the opposite side of the pulp mold forming mold to the side where the net-like body was arranged, the pulp composition was suctioned and dehydrated through the pulp mold forming mold and the net-like body by a vacuum pump, and solids (pulp, etc.) contained in the pulp composition were allowed to deposit on the net-like body to obtain a pulp mold intermediate. The resulting pulp mold intermediate was then dried by applying pressure of 0.05 to 5 MPa thereto from the tops and bottoms of male and female forming molds made of metal, which have been heated to 60 to 250°C. Thus, a pulp mold product formed into the shape of a container was produced.

[Oil resistance test]

After pouring 100 ml of corn oil at 50°C into the pulp mold and allowing it to stand at room temperature for 45 minutes, the corn oil was removed from the pulp mold, and the degree of staining in the pulp mold was evaluated. The evaluation scores were set as follows according to the degree of staining.

5: No stains inside the pulp mold.
4: Stains inside the pulp mold. No stains on the backside.
3: Stains the inside the pulp mold. Slight stain bleed out on the backside.
2: Stains inside the pulp mold. The area of stain bleed out to the backside is less than 50% of the total area.

1: Stains inside the pulp mold. The area of stain bleed out to the backside is 50% or more and less than 100% of the total area.
0: Stains over the backside.

[Example 1]

An aqueous dispersion was prepared by mixing 2 g of paraffin wax (melting point 69.8°C), 0.2 g of polyethylene oxide alkyl ether (in which alkyl has 6 to 16 carbon atoms, HLB: 7) and 17.8 g of water. The aqueous dispersion was heated to 85°C and then treated by an ultrasonic homogenizer for 20 minutes to give a water-dispersed oil resistant agent. The resulting water-dispersed oil resistant agent had the following properties.

Median diameter D50: 0.8 μm
Volume abundance ratio of particles with particle size of 100 μm or larger: 0%
Volume abundance ratio of particles with particle size of 10 μm or larger: 12%
Charge density: 20 μeq/g

The water-dispersed oil resistant agent was added to an aqueous pulp slurry with a concentration of 0.5% by weight so that the ratio of the water-dispersed oil resistant agent was 5% by weight in terms of solid content, relative to pulp, to prepare a pulp composition. The water-dispersed oil resistant agent containing pulp was charged into an automatic mold molding machine to prepare a pulp mold.
The pulp mold was subjected to the oil-resistance test, which scored 4 points. The results are shown in Table 1.

[Example 2]

An aqueous dispersion was prepared by mixing 2 g of microcrystalline wax (melting point 82.9°C), 0.2 g of polyethylene oxide alkyl ether (in which alkyl has 6 to 16 carbon atoms, HLB: 7) and 17.8 g of water. The aqueous dispersion was heated to 95°C and then treated by an ultrasonic homogenizer for 20 minutes to give a water-dispersed oil resistant agent. The resulting water-dispersed oil resistant agent had the following properties.

Median diameter D50: 0.85 μm
Volume abundance ratio of particles with particle size of 100 μm or larger: 0%
Volume abundance ratio of particles with particle size of 10 μm or larger: 18%
Charge density: 15 μeq/g

A pulp composition was prepared using the resulting water-dispersed oil resistant agent and a pulp mold was produced in the same manner as in Example 1.
The pulp mold was subjected to the oil-resistance test, which scored 4 points. The results are shown in Table 1.

[Example 3]

An aqueous dispersion was prepared by mixing 2 g of paraffin wax (melting point 69.8°C), 0.18 g of benzalkonium chloride and 17.8 g of water. The aqueous dispersion was heated to 85°C and then treated by an ultrasonic homogenizer for 20 minutes to give a water-dispersed oil resistant agent. The resulting water-dispersed oil resistant agent had the following properties.

Median diameter D50: 0.75 μm
Volume abundance ratio of particles with particle size of 100 μm or larger: 0%
Volume abundance ratio of particles with particle size of 10 μm or larger: 8%
Charge density: 75 μeq/g

A pulp composition was prepared using the resulting water-dispersed oil resistant agent and a pulp mold was produced in the same manner as in Example 1.
The pulp mold was subjected to the oil-resistance test, which scored 4 points. The results are shown in Table 1.

[Example 4]

Microcrystalline wax (melting point 79°C) was pulverized to 1 mm or less in a mortar and subjected to a dry pulverization treatment by a jet mill to give a powder of the microcrystalline wax. The particle size of the powder of the

microcrystalline wax was measured using a laser diffraction/scattering apparatus, and as a result the powder had a median diameter D50 of 0.99 μm.

A water-dispersed oil resistant agent was prepared by mixing 2 g of the microcrystalline wax powder, 0.2 g of polyethylene oxide alkyl ether (in which alkyl has 6 to 16 carbon atoms, HLB: 7) and 17.8 g of water. The resulting water-dispersed oil resistant agent had the following properties.

Median diameter D50: 0.95 μm
Volume abundance ratio of particles with particle size of 100 μm or larger: 0%
Volume abundance ratio of particles with particle size of 10 μm or larger: 25%
Charge density: 2 μeq/g

A pulp composition was prepared using the resulting water-dispersed oil resistant agent and a pulp mold was produced in the same manner as in Example 1.

The pulp mold was subjected to the oil-resistance test, which scored 4 points. The results are shown in Table 1.

[Example 5]

2 g of paraffin wax, 0.05 g of cationic starch, 0.04 g of an abietic derivative (rosin sizing agent), 0.04 g of formic acid, 0.04 g of acetic acid and 7.83 g of water were mixed and heated to 95°C. Then the mixture was treated by an ultrasonic homogenizer for 20 minutes to give a water-dispersed oil resistant agent. The resulting water-dispersed oil resistant agent had the following properties.

Median diameter D50: 0.6 μm
Volume abundance ratio of particles with particle size of 100 μm or larger: 0%
Volume abundance ratio of particles with particle size of 10 μm or larger: 0.2%
Charge density: 14 μeq/g

A pulp composition was prepared using the resulting water-dispersed oil resistant agent and a pulp mold was produced in the same manner as in Example 1.

The pulp mold was subjected to the oil-resistance test, which scored 4 points. The results are shown in Table 1.

Furthermore, the particles obtained by removing a liquid medium from the water-dispersed oil resistant agent had an average particle size of 0.45 μm.

[Example 6]

2 g of paraffin wax, 0.10 g of cationic starch, 0.04 g of an abietic derivative (rosin sizing agent), 0.02 g of formic acid, 0.02 g of acetic acid and 7.87 g of water were mixed and heated to 95°C. Then the mixture was treated by an ultrasonic homogenizer for 20 minutes to give a water-dispersed oil resistant agent. The resulting water-dispersed oil resistant agent had the following properties.

Median diameter D50: 0.22 μm
Volume abundance ratio of particles with particle size of 100 μm or larger: 0%
Volume abundance ratio of particles with particle size of 10 μm or larger: 0.1%
Charge density: 39 μeq/g

A pulp composition was prepared using the resulting water-dispersed oil resistant agent and a pulp mold was produced in the same manner as in Example 1.

The pulp mold was subjected to the oil-resistance test, which scored 4 points. The results are shown in Table 1.

Furthermore, the particles obtained by removing a liquid medium from the water-dispersed oil resistant agent had an average particle size of 0.84 μm.

[Example 7]

2 g of paraffin wax, 0.1 g of sodium oleate and 8 g of water were mixed and heated to 95°C. Then the mixture was treated by an ultrasonic homogenizer for 20 minutes to give a water-dispersed oil resistant agent. The resulting water-dispersed oil resistant agent had the following properties.

Median diameter D50: 0.45 μm

Volume abundance ratio of particles with particle size of 100 μm or larger: 0%
Volume abundance ratio of particles with particle size of 10 μm or larger: 0%
Charge density: -143 μeq/g

A pulp composition was prepared using the resulting water-dispersed oil resistant agent and a pulp mold was produced in the same manner as in Example 1.
The pulp mold was subjected to the oil-resistance test, which scored 4 points. The results are shown in Table 1.
Furthermore, the particles obtained by removing a liquid medium from the water-dispersed oil resistant agent had an average particle size of 0.45 μm.

[Example 8]

2 g of paraffin wax, 0.2 g of sodium dodecylsulfate and 8 g of water were mixed and heated to 95°C. Then the mixture was treated by an ultrasonic homogenizer for 20 minutes to give a water-dispersed oil resistant agent. The resulting water-dispersed oil resistant agent had the following properties.

Median diameter D50: 0.8 μm
Volume abundance ratio of particles with particle size of 100 μm or larger: 0%
Volume abundance ratio of particles with particle size of 10 μm or larger: 12%
Charge density: -351 μeq/g

A pulp composition was prepared using the resulting aqueous dispersion and a pulp mold was produced in the same manner as in Example 1.
The pulp mold was subjected to the oil-resistance test, which scored 4 points. The results are shown in Table 1.
Furthermore, the particles obtained by removing a liquid medium from the water-dispersed oil resistant agent had an average particle size of 0.54 μm.

[Comparative Example 1]

2 g of paraffin wax, 0.2 g of polyethylene oxide alkyl ether (in which alkyl has 6 to 16 carbon atoms, HLB: 7) and 17.8 g of water were mixed and heated to 90°C. Then the mixture was allowed to cool with stirring by a magnetic stirrer to give a water-dispersed oil resistant agent. The resulting water-dispersed oil resistant agent had the following properties.

Median diameter D50: 88 μm

Volume abundance ratio of particles with particle size of 100 μm or larger: 35%

Volume abundance ratio of particles with particle size of 10 μm or larger: 98%

A pulp composition was prepared using the water-dispersed oil resistant agent and a pulp mold was produced in the same manner as in Example 1.
The pulp mold was subjected to the oil-resistance test, which scored 2 points. The results are shown in Table 1.

[Table 1]

| | Median diameter D50 of oil resistant agent | Volume abundance ratio of particle with particle size of 100 μm or larger in oil resistant agent | Volume abundance ratio of particle with particle size of 10 μm or larger in oil resistant agent | Charge density | Oil-resistance test |
|---|---|---|---|---|---|
| *Example 1* | 0.8 μm | 0% | 12% | 20 μeq/g | 4 points |
| *Example 2* | 0.85 μm | 0% | 18% | 15 μeq/g | 4 points |
| *Example 3* | 0.75 μm | 0% | 8% | 75 μeq/g | 4 points |
| *Example 4* | 0.95 μm | 0% | 25% | 2 μeq/g | 4 points |

(continued)

| | Median diameter D50 of oil resistant agent | Volume abundance ratio of particle with particle size of 100 μm or larger in oil resistant agent | Volume abundance ratio of particle with particle size of 10 μm or larger in oil resistant agent | Charge density | Oil-resistance test |
|---|---|---|---|---|---|
| *Example 5* | 0.6 μm | 0% | 0.2% | 14 μeq/g | 4 points |
| *Example 6* | 0.22 μm | 0% | 0.1% | 39 μeq/g | 4 points |
| *Example 7* | 0.45 μm | 0% | 0% | -143 μeq/g | 4 points |
| *Example 8* | 0.8 μm | 0% | 12% | -351 μeq/g | 4 points |
| *Comparative Example 1* | 88.0 μm | 35% | 98% | - | 2 points |

**Claims**

**1.** A wax that is a wax particle used for an oil resistant agent for pulp, wherein a volume median diameter (D50) is 0.01 μm or more and 1 μm or less.

**2.** The wax according to claim 1, wherein the wax is petroleum wax.

**3.** The wax according to claim 1 or 2, wherein the wax is at least one selected from the group consisting of paraffin wax and microcrystalline wax.

**4.** The wax according to any one of claims 1 to 3, which is for internal addition.

**5.** The wax according to any one of claims 1 to 4, wherein

the wax is at least one selected from the group consisting of paraffin wax and microcrystalline wax,
the wax is for internal addition, and
the volume median diameter (D50) is 0.1 μm or more and 1 μm or less.

**6.** An oil resistant agent for pulp, comprising the wax according to any one of claims 1 to 5.

**7.** An oil resistant agent for pulp that is a water-dispersed composition, the oil resistant agent for pulp comprising:

a wax and a dispersant, wherein
a volume median diameter (D50) is 0.01 μm or more and 1 μm or less.

**8.** The oil resistant agent for pulp according to claim 7, wherein particles obtained by removing a liquid medium by air drying at room temperature have an average particle size of 0.01 μm or more and 1 μm or less obtained from an observation image by a scanning electron microscope.

**9.** The oil resistant agent for pulp according to claim 7 or 8, wherein the wax is petroleum wax.

**10.** The oil resistant agent for pulp according to any one of claims 7 to 9, wherein the wax is at least one selected from the group consisting of paraffin wax and microcrystalline wax.

**11.** The oil resistant agent for pulp according to any one of claims 7 to 10, wherein a charge density is -600 μeq/g or more and 100 μeq/g or less.

**12.** The oil resistant agent for pulp according to any one of claims 7 to 11, comprising an organic acid or an inorganic acid.

**13.** The oil resistant agent for pulp according to any one of claims 7 to 12, wherein

the wax is at least one selected from the group consisting of paraffin wax and microcrystalline wax,
the dispersant is at least one selected from the group consisting of a nonionic dispersant, an anionic dispersant and a cationic dispersant,
the additive for pulp comprises an organic acid,
an amount of the dispersant is 1 part by weight or more and 50 parts by weight or less based on 100 parts by weight of the wax,
the volume median diameter (D50) is 0.1 μm or more and 1 μm or less,
a volume abundance ratio of particles with a particle size of 100 μm or larger is 20% or less,
a volume abundance ratio of particles with a particle size of 10 μm or larger is 40% or less, and
a charge density is -400 μeq/g or more and 400 μeq/g or less.

**14.** A method for producing a pulp product, comprising treating a pulp substrate with the oil resistant agent for pulp according to any one of claims 6 to 13.

**15.** A pulp product treated with the oil resistant agent for pulp according to any one of claims 6 to 13.

**16.** The pulp product according to claim 15, which is a pulp formed article for food contact.

**INTERNATIONAL SEARCH REPORT**

International application No.
**PCT/JP2024/028502**

**A. CLASSIFICATION OF SUBJECT MATTER**

***D21H 19/18***(2006.01)i; ***C09K 3/18***(2006.01)i
FI: D21H19/18; C09K3/18

According to International Patent Classification (IPC) or to both national classification and IPC

**B. FIELDS SEARCHED**

Minimum documentation searched (classification system followed by classification symbols)

D21H19/18; C09K3/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 7217481 B1 (SAIDEN CHEMICAL IND CO., LTD.) 03 February 2023 (2023-02-03) paragraphs [0001]-[0122] | 1-3, 6-10, 14-15 |
| Y | | 4-6, 11-12, 14-16 |
| A | | 13 |
| Y | JP 2023-10656 A (DAIKIN INDUSTRIES, LTD.) 20 January 2023 (2023-01-20) claims 13-14, paragraphs [0067], [0070]-[0071], [0113] | 4-6, 11-12, 14-16 |
| Y | JP 58-41996 A (ASAHI GLASS COMPANY, LIMITED) 11 March 1983 (1983-03-11) p. 3, lower left column, lines 1-13 | 12, 14-16 |
| Y | JP 64-6196 A (DAIKIN INDUSTRIES, LTD.) 10 January 1989 (1989-01-10) p. 4, upper right column, lines 16-19, lower left column, line 19, lower right column, line 2 | 12, 14-16 |
| A | JP 8-85183 A (NEW OJI PAPER CO., LTD.) 02 April 1996 (1996-04-02) entire text, all drawings | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 September 2024** | **01 October 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/028502**

**C. DOCUMENTS CONSIDERED TO BE RELEVANT**

| Category* | Citation of document, with indication, where appropriate, of the relevant passages | Relevant to claim No. |
|---|---|---|
| A | WO 2020/130131 A1 (KURARAY CO., LTD.) 25 June 2020 (2020-06-25) entire text, all drawings | 1-16 |

Form PCT/ISA/210 (second sheet) (July 2022)

**INTERNATIONAL SEARCH REPORT**
**Information on patent family members**

International application No.
**PCT/JP2024/028502**

| Patent document cited in search report | Publication date (day/month/year) | Patent family member(s) | Publication date (day/month/year) |
|---|---|---|---|
| JP 7217481 B1 | 03 February 2023 | JP 2023-137960 A<br>CN 116770634 A | |
| JP 2023-10656 A | 20 January 2023 | US 2024/0150965 A1<br>claims 15-16, paragraphs [0243], [0248]-[0251], [0322]<br>WO 2023/282302 A1<br>EP 4349922 A1<br>CN 117642468 A<br>KR 10-2024-0016427 A | |
| JP 58-41996 A | 11 March 1983 | (Family: none) | |
| JP 64-6196 A | 10 January 1989 | EP 280115 A1<br>p. 5, lines 7-10, 37-40 | |
| JP 8-85183 A | 02 April 1996 | (Family: none) | |
| WO 2020/130131 A1 | 25 June 2020 | US 2022/0033637 A1<br>entire text, all drawings<br>EP 3901204 A1<br>CN 113166473 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011116836 A